# EUROPÄISCHE PATENTSCHRIFT

(11) **EP 3 672 270 B1**
(45) Veröffentlichungstag und Bekanntmachung des Hinweises auf die Patenterteilung: **20.04.2022**
(21) Anmeldenummer: 19218980.1
(22) Anmeldetag: 20.12.2019
(51) Int. Cl.: H04Q 9/00

(54) **VERBRAUCHSWERTERFASSUNGSEINHEIT MIT ZUMINDEST EINER FUNKSCHNITTSTELLE**
POWER CONSUMPTION DETECTION UNIT WITH AT LEAST ONE RADIO INTERFACE
UNITÉ DE DÉTECTION DE LA VALEUR DE CONSOMMATION DOTÉE D'AU MOINS UNE INTERFACE RADIO

(30) Priorität: 20.12.2018 DE 102018133076
(43) Veröffentlichungstag der Anmeldung: 24.06.2020
(73) Patentinhaber: QUNDIS GmbH, 99098 Erfurt (DE)
(72) Erfinder: KUHN, Jens, 98693 Ilmenau (DE)
(74) Vertreter: Liedtke & Partner Patentanwälte

(56) Entgegenhaltungen:
- DE-A1- 10 133 367
- DE-A1-102004 041 421
- US-A1- 2014 028 465
- US-A1- 2016 285 588

## Beschreibung

Die Erfindung betrifft eine Verbrauchswerterfassungseinheit mit zumindest einer Funkschnittstelle.

Aus dem Stand der Technik sind Verbrauchswertmessgeräte bekannt, die erfasste Verbrauchswerte mittels einer Funkkommunikationseinheit senden. Zum Beispiel sind derartige Verbrauchswertmessgeräte Verbrauchszähler, wie Wasser-, Strom-, Wärme- oder Gaszähler, und Verteilgeräte wie Heizkostenverteiler. Die Verbrauchswertmessgeräte sind beispielsweise an Verbrauchsstellen in einem Gebäude oder einem Raum installiert.

Versorgungsunternehmen, wie beispielsweise Energieversorgungsunternehmen oder Wasserversorgungsunternehmen, erfassen üblicherweise zur Erstellung von Verbrauchsabrechnungen für Kunden Verbrauchsdaten von diesen Verbrauchswertmessgeräten. Die Verbrauchsdaten werden dabei vom Verbrauchswertmessgerät erfasst.

Beispielsweise ist aus der EP 1 405 282 B1 ein Verbrauchszähler mit einer Funksendeeinrichtung zur Funkübertragung von Zählerstandinformationen bekannt. Beispielsweise ist aus der DE 10 2004 041 421 A1 ein Verfahren zur Funkübertragung von Verbrauchsdaten von einem Verbrauchserfassungsgerät bekannt.

Beispielsweise ist aus der DE 10 133 367 A1 ein Verbrauchszähler mit einer Funksendeeinrichtung zur Funkübertragung von Zählerstandsinformationen zu einem mobilen oder stationären Funkempfänger bekannt, bei dem die Funksendeeinrichtung zum Senden von Funktelegrammen wenigstens zweier unterschiedlicher Telegrammtypen vorbereitet ist. Der Verbrauchszähler arbeitet dabei zeitweise in einem für den Empfang mit stationären Funkempfangsgeräten optimierten Sendebetrieb und zeitweise in einem für dem Empfang mit einem mobilen Empfangsgerät optimierten Sendebetrieb, wobei jeweils ein anderer Funktelegrammtyp verwendet wird. Um die unterschiedlichen Anforderungen für den mobilen und den stationären Funkempfang erreichen zu können, unterscheiden sich die Funktelegrammtypen in der Sendeleistung, der Sendehäufigkeit und/oder der Funktelegrammlänge. Insbesondere ist von Bedeutung, dass die Funktelegramme für den stationären Empfang eine höhere Sendeleistung aufweisen.

Der Erfindung liegt die Aufgabe zu Grunde, ein gegenüber dem Stand der Technik verbesserte Verbrauchswerterfassungseinheit mit zumindest einer Funkschnittstelle anzugeben.

Die Aufgabe wird erfindungsgemäß durch die im Anspruch 1 angegebenen Merkmale gelöst.

Vorteilhafte Ausgestaltungen der Erfindung sind Gegenstand der Unteransprüche.

Eine Verbrauchswerterfassungseinheit, ein Verbrauchswertmessgerät mit Funkschnittstelle oder ein Verbrauchswertmessgerät verbunden mit einem Funkmodul, mit zumindest einer Funkschnittstelle umfasst zumindest zwei unterschiedliche Funkbetriebsarten zur Übertragung von Funktelegrammen an mobile und stationäre Datenerfassungsgeräte. Die Funkbetriebsarten unterscheiden sich zumindest in Sendeleistung und Sendehäufigkeit. Sie können sich weiterhin unterscheiden in Kodierung, Chiprate und/oder Trägerfrequenz. Beispielsweise sind die Funkbetriebsarten im periodischen oder nicht periodischen Wechsel betreibbar. Weiterhin ist jeder Funkbetriebsart zumindest ein Sendezeitraum, insbesondere ein vorgegebener oder vorgebbarer Sendezeitraum, zugeordnet, wobei zumindest eine der Funkbetriebsarten, insbesondere jede der Funkbetriebsarten, konfiguriert ist, in Abhängigkeit des zugeordneten Sendezeitraums eine Vielzahl von verschiedenen Funktelegrammen im periodischen oder nicht periodischen Wechsel sowohl an mobile Datenerfassungsgeräte als auch an stationäre Datenerfassungsgeräte zu übertragen. Insbesondere ist jede Funkbetriebsart derart konfiguriert, dass die jeweilige, insbesondere aktivierte Funkbetriebsart sowohl an mobile als auch an stationäre Datenerfassungsgeräte und somit an beide verschiedenartige Datenerfassungsgeräte Funktelegramme sendet.

Beispielsweise unterscheiden sich die Funkbetriebsarten im Wesentlichen durch ihre Mittenfrequenz, Kodierung, Startsequenz und Chiprate. Insbesondere weisen die Funkbetriebsarten jeweils unterschiedliche Frequenzbänder und/oder Kodierungen und/oder Chipraten und/oder Startsequenzen auf. Unterschiedliche Kodierungen und Chipraten wirken sich beispielsweise auf die Telegrammlänge der jeweiligen Funktelegramme aus und beeinflussen somit die Funkbelastungsdauer.

Dabei unterscheiden sich die Funkbetriebsarten unter anderem in der Art und Weise, wie die Funktelegramme übertragen werden. Beispielsweise unterscheiden sich die Funkbetriebsarten bei den Funkübertragungen der Funktelegramme in der Frequenz, der Chiprate, der Kodierung, der Frequenzbänder, der Startsequenzen, der Funktelegrammlänge und/oder der Sendehäufigkeit. Die Funkbetriebsarten unterscheiden aber nicht nach den Empfangsgeräten, wie dem mobilen Datenerfassungsgerät und dem stationären Datenerfassungsgerät. Die Funktelegramme der beiden Funkbetriebsarten werden derart ausgesendet, dass diese sowohl von einem mobilen als auch einem stationären Datenerfassungsgerät empfangen und dekodiert werden können. Der Vorteil der Erfindung besteht darin, dass empfangsseitig gesteuert werden kann, welche Informationen aus den Telegrammen benötigt werden.

Zum Beispiel umfassen Funktelegramme erfasste Verbrauchswerte. Verbrauchswerte sind beispielsweise Zählerstandinformationen, die durch Verbrauchswertmess- und Verteilgeräte, insbesondere Verbrauchszähler, wie Wasser-, Strom-, Wärme- oder Gaszähler, und Heizkostenverteiler ermittelbar sind. Beispielsweise werden Funktelegramme, z. B. Datentelegramme, von Messdienstleistern verwendet, um Verbrauchswertabrechnungen beispielsweise für Nebenkostenabrechnungen von vermieteten Wohnungen und Räumen zu erstellen.

Beispielsweise umfasst die Verbrauchswerterfassungseinheit zumindest eine Funkkommunikationseinheit, beispielsweise in Form einer Sende- und Empfangseinrichtung zur Bereitstellung der zumindest einen Funkschnittstelle. Über die Funkschnittstelle erfolgt die Funkkommunikation mit mobilen und stationären Datenerfassungsgeräten und/oder Systemgeräten. Beispielsweise umfassen die Systemgeräte Signalverstärker oder -aufbereiter zur Verstärkung eines Signals. Zum Beispiel umfassen die Systemgeräte so genannte Repeater.

Alternativ ist die Verbrauchswerterfassungseinheit mit zumindest einem Funkaufsatzmodul zur Bereitstellung der Funkschnittstelle ausgestattet.

Mittels des erfindungsgemäßen Verbrauchswertmessgeräts sind Übertragungen von unterschiedlichen Funktelegrammen in verschiedenen Funkbetriebsarten an mobile und stationäre Datenerfassungsgeräte ermöglicht. Dadurch ist es insbesondere möglich, die Telegrammlänge sehr effektiv zu beeinflussen. Somit ist es möglich z.B. Telegramme mit aktuellen und historischen Daten, die für den mobilen Empfang gekennzeichnet sind, mit einer höheren Chiprate und einer effizienteren Kodierung zu übertragen, so dass sie eine kürzere Telegrammlänge (Dauer in ms) besitzen als für den stationären Empfang gekennzeichnete Telegramme in einer anderen Betriebsart.

Zum Beispiel sind Telegramme, gekennzeichnet zur mobilen Datenerfassung, oftmals länger durch eine Anzahl der Nutzdaten (Bytes), da sie neben aktuellen und Stichtagsdaten auch historische Verbrauchswerte enthalten. Inzwischen bestehen jedoch verstärkt Kundenwünsche nach historischen Verbrauchswerten, Stichtagsdaten und/oder Statistikinformationen auch für stationäre Datenempfänger. Es gibt also keinen eindeutigen Zusammenhang zwischen Telegrammdaten, Telegrammlänge und Art des vorgesehenen Datenerfassungsgeräts. Zur Bereitstellung einer Mehrzahl von Möglichkeiten zur kundenorientierten Datensammlung und Datenbereitstellung wird die erfindungsgemäße Verbrauchswerterfassungseinheit vorgeschlagen.

Eine weitere Anforderung von beispielsweise Ableseunternehmen hinsichtlich der Sendeleistung ist, dass sowohl die Funktelegramme für die stationären als auch die Funktelegramme für die mobilen Datenerfassungsgeräte mit möglichst großer Sendeleistung übertragbar bzw. abstrahlbar sind, um beispielsweise eine maximale Reichweite, insbesondere Sendereichweite, zu erreichen. Erfindungsgemäss umfasst eine der Funkbetriebsarten eine höhere Sendeleistung und Sendehäufigkeit zur Erfüllung der oben genannten Anforderung.

Des Weiteren können unterschiedliche Funkbetriebsarten mit vergleichsweise geringerer Funkbelastung, insbesondere Leistung, und Funkbelastungsdauer für Verbraucher, insbesondere Mieter, angeboten werden. Erfindungsgemäss umfasst eine weitere Funkbetriebsart eine vergleichsweise geringere Sendeleistung und Sendehäufigkeit. Zum Beispiel ist eine Sensibilität in Bezug auf Belastungen durch elektrisch, magnetisch und/oder elektromagnetisch erzeugte Felder erhöht, so dass viele Verbraucher solchen Belastungen nicht ständig ausgesetzt werden wollen. Durch die Möglichkeit zur Einstellung unterschiedlicher Funkbetriebsarten kann eine solche Belastung vermieden werden. Insbesondere ist ein Sendezeitraum auf beispielsweise wenige Stunden am Tag, vorzugsweise während der üblichen Arbeitszeit, eingestellt und ein Sendezeitraum an Wochenenden deaktiviert.

Einer anderen Funkbetriebsart ist beispielsweise ein Sendezeitraum zugeordnet, der eingerichtet ist, die jeweiligen Funktelegramme zu bestimmten Uhrzeiten oder über eine Anzahl vorgegebener Stunden am Tag zu übertragen. Beispielsweise sind die Funktelegramme mit sehr kleinen Zeitabständen übermittelbar, sodass trotz verkürzter Sendezeiträume eine Mehrzahl von Funktelegrammen übertragbar sind. In einer Liegenschaft können somit eine Mehrzahl von Verbrauchswerterfassungsgeräten innerhalb dieser Sendezeiträume abgefragt und erfasst werden.

Gemäß der Erfindung ist die Funkbetriebsart derart konfiguriert, dass die Funktelegramme sowohl für den stationären als auch für den mobilen Empfang bereitstellbar sind und übertragen werden. Insbesondere kann die Funkbetriebsart so angepasst werden, dass die Funktelegramme sowohl für den stationären als auch für den mobilen Empfang angepasst werden können, dass sie sowohl von beliebigen mobilen als auch von beliebigen stationären Datenerfassungsgeräten, wie beispielsweise Verbrauchsdatensammlern, empfangbar und dekodierbar sind. D. h., dass die Funktelegramme zwar für den Empfang durch mobile oder stationäre Datenempfänger vorgesehen gekennzeichnet sind, jedoch derart konfiguriert, parametriert oder formatiert sind, dass diese auch von den tatsächlich vorhandenen unterschiedlichen Datenerfassungsgeräten empfangbar und auslesbar sind. Insbesondere können Funktelegramme mit historischen Daten und/oder Stichtagsdaten durch die Wahl einer geeigneten Funkbetriebsart so verkürzt werden (Dauer), dass sie auch für den energieoptimierten Empfang stationärer Datenempfänger mit Batteriebetrieb bereitgestellt werden können. Alternativ kann in einer anderen Betriebsart die Sendehäufigkeit erhöht werden. Dadurch muss z. B. der Messdienstleister nicht so lange auf gewünschte Funktelegramme für eine bestimmte Verwendung warten bzw. ist die Empfangszeit deutlich verkürzt. Zum Beispiel ist für einen Messdienstleister der Zeitaufwand für den Empfang der für ihn relevanten Daten ein wichtiges Kriterium bei Auswahl der Verbrauchswerterfassungseinheit, insbesondere des Verbrauchswertmessgeräts. Insbesondere sind Auslesezeiten für eine Ermittlung der aktuellen Verbrauchswerte und beispielsweise des letzten Stichtagswerts im Wesentlichen deutlich verbessert, insbesondere verkürzt.

In einer Weiterbildung ist zumindest eine der Funkbetriebsarten eingerichtet, sowohl kürzere als auch längere, informationsgleiche und/oder informationsunterschiedliche Funktelegramme zu übermitteln. Dies geschieht durch Auswahl einer geeigneten Startsequenz der Telegramme. Die einzelnen Funkdaten sind nicht auf Funkbetriebsarten beschränkt, dies gilt auch umgekehrt. Insbesondere sind die Funkbetriebsarten eingerichtet, um beispielsweise in Abhängigkeit eines gewünschten Sendezeitraums und gewünschten Eigenschaften betrieben zu werden. Beispielsweise umfassen diese Eigenschaften vergleichsweise höhere oder niedrigere Sendeleistungen, Sendehäufigkeiten, unterschiedliche Chipraten und/oder Kodierungen und/oder Trägerfrequenzen und Startsequenzen. Mit anderen Worten: Die Funkbetriebsarten sind konfiguriert, die Übertragung in Abhängigkeit zumindest des Sendezeitraums der jeweiligen Funktelegramme durchzuführen. Beispielsweise sind die Funkbetriebsarten konfiguriert, die Übertragung unabhängig von Telegrammlänge und Telegramminformationen eines zu übertragenden Funktelegramms durchzuführen.

Beispielsweise ist es ermöglicht, kundenspezifische Funktelegramme, beispielsweise Tagesstatistikinformationen umfassend, im Wesentlichen beliebig mit anderen Funktelegrammen zu mischen. Zum Beispiel sind somit spezielle Telegrammdaten zur Nutzung für den Kunden verfügbar, insbesondere sowohl für stationäre als auch mobile Datenerfassungsgeräte. Beispielsweise ist möglich, die Datenerfassungsgeräte mit einer Applikationssoftware zur Bereitstellung verfügbarer Telegrammdaten auszustatten.

Gemäß einer weiteren Ausführungsform ist zumindest eine der Funkbetriebsarten konfiguriert, die Mehrzahl der verschiedenen Funktelegramme zueinander synchronisiert im periodischen oder nicht periodischen Wechsel an mobile und stationäre Datenerfassungsgeräte zu übertragen. Zum Beispiel sind Sendezeitpunkte der jeweiligen Funktelegramme zueinander synchronisiert. Beispielsweise umfassen die Funktelegramme unterschiedliche Telegrammdaten und Telegrammlängen, wobei die jeweiligen Funktelegramme unterschiedlich oft ausgesendet werden. Die jeweiligen Sendezeitpunkte sind mittels einer Synchronisationsfrequenz ableitbar. Des Weiteren ist mittels der zueinander synchronisierten Funktelegrammübertragung möglich, dass die Datenerfassungsgeräte, insbesondere Datenempfangsgeräte, derart eingestellt oder ansteuerbar sind, dass diese nur zu Zeitpunkten der Übertragung, insbesondere Aussendung, der jeweiligen Funktelegramme eine Empfangsbereitschaft herstellen. Dies erhöht eine Einsatzdauer für insbesondere batteriebetriebene Datenerfassungsgeräte.

In einer Weiterbildung sind in jeder Funkbetriebsart Übertragungsintervalle und/oder Sendezeiträume unterschiedlicher Funktelegramme unabhängig voneinander einstellbar, insbesondere ohne Aufhebung der Synchronisation der Funktelegramme. Insbesondere ist eine Sendehäufigkeit der jeweiligen unterschiedlichen Funktelegramme variabel einstellbar. Auch Funktelegramme mit gleicher Telegrammlänge und unterschiedlichen Telegrammdaten sind unterschiedlich oft und in unterschiedlichen oder gleichen Zeitabständen übertragbar. Weiterhin ist beispielsweise eine stundenweise Aktivierung von Telegrammaussendung möglich. Des Weiteren ist eine Konfiguration einer tage- und/oder monatsweisen Aktivierung von Telegrammaussendungen möglich. Dabei sind zumindest ein Energieverbrauch der Verbrauchswerterfassungseinheit und die Funkbelastung der Mieter bzw. Verbraucher verringert.

In einer möglichen Ausführungsform ist ein Wechsel der Funkbetriebsarten manuell und extern einstellbar. Insbesondere sind die Funkbetriebsarten von außen steuerbar, beispielsweise über eine externe Parametriereinheit. Beispielsweise ist die jeweilige Funkbetriebsart ab Werk und/oder durch den Messdienstleister eingestellt. Damit kann die Funkbelastung der Verbraucher definiert durch den Messdienst eingestellt werden und beispielsweise nach einem Mieterwechsel oder einem Umbau, einer Reparatur und/oder Wartung der Verbrauchswerterfassungseinheit erneut angepasst werden.

Eine weitere Ausführungsform sieht vor, dass die Funktelegramme sich zumindest in Telegrammlänge und Telegramminformationen unterscheiden, wobei Telegramminformationen zumindest aktuelle Verbrauchswerte und/oder historische Verbrauchswerte und/oder Statistikwerte und/oder Statusinformationen umfassen. Beispielsweise sind nicht in jedem Funktelegramm alle verfügbaren Daten, d. h. Telegramminformationen enthalten, wodurch insbesondere eine durchschnittliche Telegrammlänge verringert ist. Dadurch ist insbesondere ein Energieverbrauch verringert. D. h., dass eine Laufzeit einer beispielsweise batteriebetriebenen Verbrauchswerterfassungseinheit verlängerbar ist. Insbesondere kann Batteriekapazität gespart werden. Darüber hinaus ist eine Funkbelastung durch Übertragung von vergleichsweise verkürzten Funktelegrammen verringert. Insbesondere umfassen Funktelegramme unterschiedliche Telegrammlängen aufgrund unterschiedlicher Telegrammdaten bzw. unterschiedlicher Telegramminformationen.

Erfindungsgemäss wird vorgesehen, dass eine erste Funkbetriebsart und eine zweite Funkbetriebsart derart einstellbar oder eingestellt sind, dass eine Sendeleistung und eine Sendehäufigkeit in der ersten Funkbetriebsart jeweils höher ist als eine Sendeleistung und eine Sendehäufigkeit in der zweiten Funkbetriebsart. Die beiden einstellbaren oder eingestellten Funkbetriebsarten sind dabei nicht auf einen der Funkempfänger beschränkt, sondern in beiden einstellbaren oder eingestellten Funkbetriebsarten werden die Funktelegramme sowohl an den stationären als auch den mobilen Funkempfänger übertragen.

Dabei können sowohl kürzere als auch längere und/oder informationsgleiche oder informationsunterschiedliche Funktelegramme mit jeder Funkbetriebsart versendet werden.

Ein weiterer Aspekt sieht vor, dass zumindest eine Konfigurationseinheit vorgesehen ist, die eine Konfigurationsschnittstelle umfasst, die eingerichtet ist, Konfigurationsdaten zu empfangen und/oder zu senden. Die Konfigurationseinheit ist eingerichtet, die empfangenen Konfigurationsdaten zu verarbeiten und die Funkschnittstelle entsprechend einzustellen, beispielsweise die Funkbetriebsart vorzugeben. Somit kann empfangsseitig gesteuert werden, welche Informationen in den Funktelegrammen übertragen werden und/oder in welcher Funkbetriebsart gesendet wird.

Gemäß einer möglichen Weiterbildung ist die zumindest eine Konfigurationseinheit eingerichtet, Telegramminformationen der zu übertragenden Funktelegramme und/oder die Funkbetriebsart vorzugeben. Beispielsweise umfasst die Verbrauchswerterfassungseinheit eine solche Konfigurationseinheit, welche extern, beispielsweise über eine externe Recheneinheit oder eine zentrale Steuereinheit bedienbar ist. Alternativ oder zusätzlich ist die Verbrauchswerterfassungseinheit mit zumindest einer externen Konfigurationseinheit gekoppelt.

Beispielsweise umfasst die Verbrauchswerterfassungseinheit ein Anwendungsprogramm, welches mit der Konfigurationseinheit drahtlos oder drahtgebunden kommuniziert. Ein Nutzer, beispielsweise Messdienstleister oder Verbraucher, kann selbst entscheiden, welche Telegramminformationen, insbesondere erfassbare oder erfasste Informationen, aus diversen Funktelegrammen für seine Verwendung benötigt werden. Beispielsweise kann der Messdienstleister gezielt Telegramminformationen, d. h. Daten aus den unterschiedlichen Funktelegrammen für seine Abrechnungen auswählen und übermittelt bekommen. Dadurch kann der Nutzer selbst eine Zeitdauer zur Datenerfassung bzw. eine Auslesezeit im Wesentlichen beeinflussen.

In einer weiteren möglichen Ausgestaltung ist zumindest eine der Funkbetriebsarten konfiguriert, ereignisgesteuerte Funktelegramme an mobile und stationäre Datenerfassungsgeräte zu übertragen. Um geräteinterne Kollisionen, insbesondere Funk- und/oder Datenkollisionen, zwischen verschiedenen Funktelegrammen zu vermeiden, weisen die ereignisgesteuerten Funktelegramme gegenüber den zueinander synchronisierten Funktelegrammen eine Übertragungspriorität auf. Beispielsweise umfasst zumindest eine der Funkbetriebsarten zumindest eine Antikollisionseinstellung mittels welcher die ereignisgesteuerten Funktelegramme mit einer Übertragungspriorität übermittelt werden. Beispielsweise ist die Antikollisionseinstellung als Anwendungsprogramm hinterlegt. Weiterhin ist die Antikollisionseinstellung vorgesehen, eine Blockierung des Empfangs und/oder der Aussendung von ereignisgesteuerten Telegrammaussendungen zu verhindern.

Zum Beispiel sind ereignisgesteuerte Telegrammaussendungen anwendungsgesteuerte Telegrammaussendungen, welche beispielsweise durch das Erreichen eines bestimmten Messwertes (z.B. Temperatur der Heizkörperoberfläche) aktivierbar sind. Andere mögliche Ereignisse sind ein Monats- und/oder Jahreswechsel und/oder Mieterwechsel. Beispielsweise werden ereignisgesteuerte Telegrammaussendungen auch ausgelöst, wenn ein Wasserzähler einen Wasserfluss festgestellt hat oder wenn ein bestimmter Verbrauchswert (Zählerstand) erreicht wurde. Ein weiteres Ereignis für eine ereignisgesteuerte Telegrammaussendung ist der Empfang eines entsprechenden Anforderungssignals, insbesondere eines entsprechenden Anforderungstelegramms, dass gegebenenfalls auch eine Konfiguration eines Telegramminhalts, insbesondere der enthaltenen Verbrauchsdaten, beeinflussen kann.

Gemäß einer Weiterbildung umfasst zumindest eine der Funkbetriebsarten zumindest eine weitere Antikollisionseinstellung, eingerichtet zeitgleiche Übertragungen gleichartiger Funktelegramme von unterschiedlichen in einer Umgebung befindlichen Verbrauchswerterfassungseinheiten zu verhindern. Beispielsweise umfasst die Verbrauchswerterfassungseinheit zumindest ein Anwendungsprogramm, eine Prozessoreinheit und/oder eine Steuereinheit mit einem solchen Antikollisionsmechanismus. Insbesondere ist weitestgehend vermieden, dass gleichartige Funktelegramme unterschiedlicher Verbrauchswerterfassungseinheiten exakt, insbesondere Mikrosekunden genau, zum selben Zeitpunkt ausgesendet werden. Beispielsweise sind geräteindividuelle Abweichungen zu den synchronisierten Sendezeitpunkten vorgegeben.

Ausführungsbeispiele der Erfindung werden im Folgenden anhand von Zeichnungen näher erläutert.

Darin zeigen:
- Figuren 1A und 1B: schematisch jeweils ein Ausführungsbeispiel einer Verbrauchswerterfassungseinheit mit zumindest einer Funkschnittstelle,
- Figur 2: schematisch ein Diagramm einer zeitlichen Abfolge verschiedener Funktelegramme mit jeweils unterschiedlichen Telegramminformationen und Telegrammlänge,
- Figur 3: schematisch eine Ausführungsform einer getakteten Aktivierung von Telegrammaussendung, und
- Figur 4: schematisch eine Ausführungsform einer Telegrammstruktur.

Einander entsprechende Teile sind in allen Figuren mit den gleichen Bezugszeichen versehen.

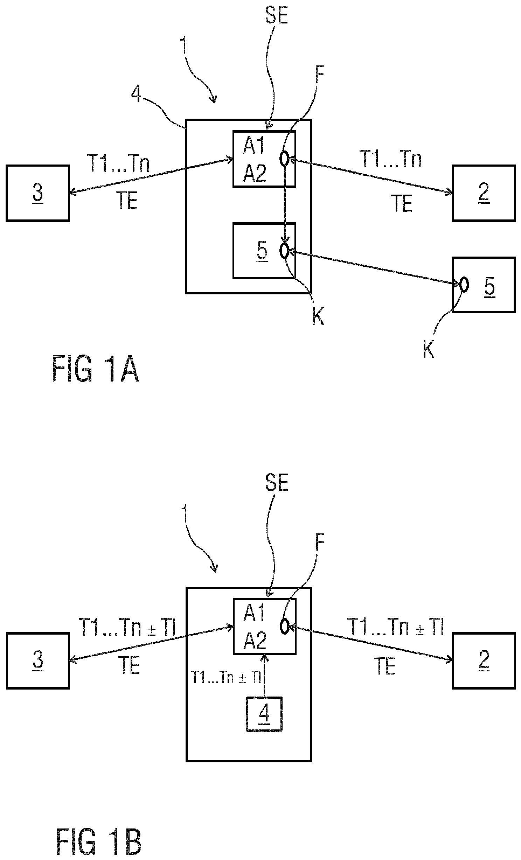

**Figuren 1A und 1B** zeigen jeweils schematisch ein Ausführungsbeispiel einer Verbrauchswerterfassungseinheit 1 mit zumindest einer Funkschnittstelle F zur Funkübertragung von Funktelegrammen T1 bis Tn an zumindest ein mobiles Datenerfassungsgerät 2 und an zumindest ein stationäres Datenerfassungsgerät 3.

Beispielsweise ist der Verbrauchswerterfassungseinheit 1 in Figur 1A ein Verbrauchswertmessgerät 4, insbesondere Verbrauchszähler, wie Wasser-, Strom-, Wärme- oder Gaszähler, oder ein Heizkostenverteiler mit integrierter Funkschnittstelle F. Die Verbrauchswerterfassungseinheit 1 ist zur Erfassung von Verbrauchswerten, wie beispielsweise Zählerstandinformationen, von einer Verbrauchsstelle, beispielsweise in einem Gebäude, vorgesehen. Die Verbrauchswerte werden zur Ermittlung von Abrechnungskosten von Messdienstleistern verwendet.

Die Verbrauchswerterfassungseinheit 1 ist dabei eingerichtet, direkt Verbrauchswerte zu erfassen und diese über die integrierte Funkschnittstelle F an mobile Datenerfassungsgeräte 2 und stationäre Datenerfassungsgeräte 3 und/oder an eine zentrale Recheneinheit (nicht näher dargestellt) zur Abrechnung zu übertragen (Figur 1A). Eine solche Verbrauchswerterfassungseinheit 1 nach Figur 1A umfasst ein integriertes Verbrauchswertmessgerät 4 zur Erfassung und Verarbeitung der Verbrauchswerte und ist somit als ein Verbrauchszähler ausgebildet.

Die Verbrauchswerterfassungseinheit 1 kann alternativ oder zusätzlich eingerichtet sein, Verbrauchswerte zu empfangen und weiterzusenden. Eine solche Verbrauchswerterfassungseinheit 1 ist beispielsweise ein Datensammler, welcher Verbrauchswerte von mehreren entfernten Verbrauchswertmessgeräten (nicht näher dargestellt) mittels der integrierten Sende- und Empfangseinrichtung SE empfängt und die empfangenen und gegebenenfalls zwischengespeicherten Verbrauchswerte mittels der Sende- und Empfangseinrichtung SE an mobile Datenerfassungsgeräte 2 und stationäre Datenerfassungsgeräte 3 und/oder an eine zentrale Recheneinheit (nicht näher dargestellt) zur Abrechnung sendet. Ein solcher Datensammler kann aber zusätzlich selbst als Verbrauchszähler ausgebildet sein und ein integriertes Verbrauchswertmessgerät 4 umfassen.

Die Verbrauchswerterfassungseinheit 1 umfasst beispielsweise zur Verbrauchswerteerfassung und/oder Verbrauchswerteverarbeitung das Verbrauchswertmessgerät 4, zum Beispiel eine Sensoreinheit mit Sensoren zur Erfassung von Verbrauchswerten). Das Verbrauchswertmessgerät 4 kann eine Steuereinheit umfassen. Alternativ kann eine separate Steuereinheit (nicht näher dargestellt) in der Verbrauchswerterfassungseinheit 1 vorgesehen sein. Das Verbrauchsmessgerät 4 und die Steuereinheit sind datentechnisch miteinander gekoppelt. Darüber hinaus kann die Verbrauchswerterfassungseinheit 1 einen nicht näher dargestellten Speicher zur Speicherung der Verbrauchswerte (auch Verbrauchsdaten genannt) umfassen.

Weiterhin ist die Verbrauchswerterfassungseinheit 1 in Figur 1B beispielsweise ein Verbrauchswertmessgerät 4 verbunden mit einem Funkaufsatzmodul. Beispielsweise bildet ein Verbrauchswertmessgerät 4 ohne eigene Funkschnittstelle gekoppelt mit einem Funkaufsatzmodul eine solche Verbrauchswerterfassungseinheit 1. Die in den Funktelegrammen T1 bis Tn zu übertragenden Verbrauchsdaten erhält die Sende- und Empfangseinrichtung SE (hier ein Funkaufsatzmodul) vom Verbrauchswertmessgerät 4.

Die Datenerfassungsgeräte 2, 3 sind beispielsweise stationäre oder mobile Auslesegeräte von Messdienstleistern bzw. Systemgeräte zum Empfang, Verarbeitung und/oder Weiterleitung der Funktelegramme T1 bis Tn.

Beispielsweise ist die Funkschnittstelle F durch eine in der Verbrauchswerterfassungseinheit 1 integrierte Sende- und Empfangseinrichtung SE bereitgestellt (Figur 1A). Denkbar ist auch, dass die Funkschnittstelle F durch ein an der Verbrauchswerterfassungseinheit 1, insbesondere an das Verbrauchswertmessgerät 4 angeordnetes, beispielsweise aufgesetztes Funkaufsatzmodul bereitstellbar ist (Figur 1B).

Im dargestellten Ausführungsbeispiel umfasst die Verbrauchswerterfassungseinheit 1 eine Sende- und Empfangseinrichtung SE. Die Sende- und Empfangseinrichtung SE weist die Funkschnittstelle F auf. Beispielsweise stellt die Sende- und Empfangseinrichtung SE die zu übertragenden Funktelegramme T1 bis Tn zur Übermittlung bereit. Über die Funkschnittstelle F kommuniziert die Sende- und Empfangseinrichtung SE mit dem mobilen Datenerfassungsgerät 2 und dem stationären Datenerfassungsgerät 3.

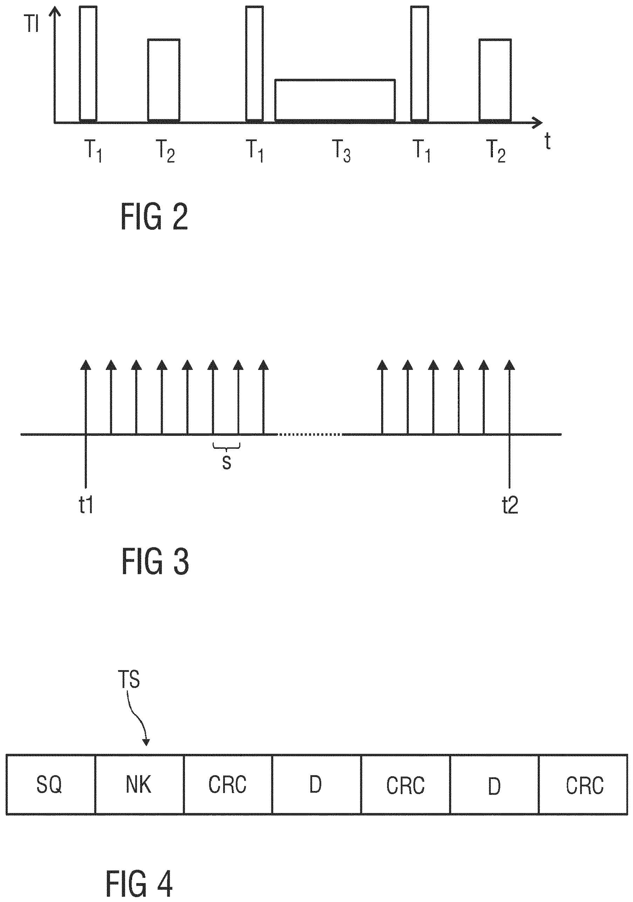

Über die Funkschnittstelle F ist des Weiteren eine ereignisgesteuerte Telegrammaussendung durchführbar. Weiterhin ist es prinzipiell möglich, über die Funkschnittstelle F durch den Empfang ereignisgesteuerter Funktelegramme TE und/oder Konfigurationsdaten auch eine Konfiguration der Funktelegramme T1 bis Tn und/oder von Sendezeiträumen zu steuern. Beispielsweise ist ein Telegramminhalt konfigurierbar. Zum Beispiel können/kann in Figur 1B dargestellte Telegramminformationen TI, insbesondere zu übertragende Verbrauchsdaten, und/oder eine in Figur 4 gezeigte Telegrammstruktur TS konfiguriert werden.

Hierzu ist die Funkschnittstelle F beispielsweise über eine erste Verbindung mit einer integrierten Konfigurationsschnittstelle K einer Konfigurationseinheit 5 gekoppelt, um beispielsweise Konfigurationsdaten, die in den ereignisgesteuerten Funktelegrammen enthalten sind, an die Konfigurationseinheit 5 zu übertragen. Die Konfigurationseinheit 5 ist eingerichtet, die Konfigurationsdaten zu verarbeiten und beispielsweise anhand der Konfigurationsdaten Telegramminhalte, insbesondere Telegramminformationen TI von auszusendenden Funktelegrammen T1 bis Tn zu konfigurieren und/oder eine Funkbetriebsart A1, A2 vorzugeben und/oder einzustellen.

Alternativ oder zusätzlich kann über die Konfigurationsschnittstelle K der integrierten Konfigurationseinheit 5 eine zweite Verbindung zu einer entfernten Konfigurationsschnittstelle K einer entfernten Konfigurationseinheit 5, zum Beispiel bei einer zentralen Recheneinheit und/oder bei dem mobilen Datenerfassungsgerät 2 und/oder bei dem stationären Datenerfassungsgerät 3, hergestellt werden und über diese Konfigurationsdaten ausgetauscht werden. Die Konfigurationsschnittstellen K sind hierzu jeweils zum Empfang und/oder zum Übertragen von Konfigurationsdaten eingerichtet.

Des Weiteren sind die Funktelegramme T1 bis Tn in zumindest zwei unterschiedlichen Funkbetriebsarten A1, A2 übertragbar. Die Funktelegramme T1 bis Tn werden an die Datenerfassungsgeräte 2, 3 beispielsweise zur Auswertung für die Messdienstleister oder zur Information von Verbrauchern übermittelt.

Die Funkbetriebsarten A1, A2 unterscheiden sich in Sendeleistung und/oder Sendehäufigkeit und/oder Kodierung und/oder Chiprate und/oder Startsequenz der Funktelegramme und/oder Trägerfrequenz bzw. Frequenzband. Insbesondere sind die Funkbetriebsarten A1, A2 im periodischen oder nicht periodischen Wechsel betreibbar.

Des Weiteren ist jeder Funkbetriebsart A1 und A2 zumindest ein Sendezeitraum zugeordnet. Zudem ist jede der Funkbetriebsarten konfiguriert, in Abhängigkeit des jeweils zugeordneten Sendezeitraums eine Mehrzahl von verschiedenen Funktelegrammen T1 bis Tn im periodischen oder nicht periodischen Wechsel sowohl an das mobile Datenerfassungsgerät 2 als auch an das stationäre Datenerfassungsgerät 3 zu übermitteln. Insbesondere sind die Funkbetriebsarten A1, A2 derart eingestellt, dass die Mehrzahl der verschiedenen Funktelegramme T1 bis Tn zueinander synchronisiert ausgesendet wird.

Messdienstleister erhalten dadurch vergleichsweise mehr Spielraum bei der Planung der Verbrauchswerterfassung sowie beispielsweise der Heiz- und Betriebskostenabrechnung.

Insbesondere sind die Funktelegramme T1 bis Tn derart eingerichtet, dass diese sowohl von dem mobilen Datenerfassungsgerät 2 als auch von dem stationären Datenerfassungsgerät 3 empfangbar und dekodierbar sind. Insbesondere weisen die Funktelegramme T1 bis Tn jeweils ein Format auf, welches derart ausgebildet ist, dass die Funktelegramme T1 bis Tn unabhängig der Funkbetriebsart A1, A2 an die unterschiedlichen Datenerfassungsgeräte 2, 3 aussendbar sind.

Erfindungsgemäss weist die Verbrauchswerterfassungseinheit 1 eine erste Funkbetriebsart A1 auf, welche eine vergleichsweise hohe Sendeleistung und Sendehäufigkeit der Funktelegramme T1 bis Tn umfasst. Die zweite Funkbetriebsart A2 weist beispielsweise eine vergleichsweise niedrigere Sendeleistung und Sendehäufigkeit der Funktelegramme T1 bis Tn auf.

In einer Weiterbildung unterscheiden sich die Funkbetriebsarten A1 und A2 durch ihre Kodierungen, Chipraten, Startsequenzen und Trägerfrequenzen bzw. Frequenzbänder. Weiterhin unterscheiden sich die Funkbetriebsarten A1, A2 beispielsweise in Sendereichweite, Sendezeitraum und Übertragungsintervalle der einzelnen Funktelegramme T1 bis Tn.

Zum Beispiel ist einer Funkbetriebsart A1 ein Sendezeitraum zugeordnet, die eingerichtet ist, die jeweiligen Funktelegramme T1 bis Tn werktags in der üblichen Arbeitszeit zu übertragen. Einer anderen Funkbetriebsart A2 ist beispielsweise ein Sendezeitraum zugeordnet, die eingerichtet ist, die jeweiligen Funktelegramme T1 bis Tn zu bestimmten Uhrzeiten oder über eine Anzahl vorgegebener Stunden am Tag zu übertragen. Am Wochenende und nachts ist die Übertragung beispielsweise deaktiviert. Die Sendezeiträume der einzelnen Funktelegramme T1 bis Tn sind in jeder Funkbetriebsart A1, A2 sowohl stunden-, tage- als auch monatsweise konfigurierbar. Insbesondere sind die Sendezeiträume verschiedener Funktelegramme T1 bis Tn unabhängig voneinander konfigurierbar, wobei eine Synchronisation der Funktelegramme T1 bis Tn nicht beeinflusst wird. Insbesondere ist ein Wechsel der Funkbetriebsarten A1 und A2 manuell von außen, d. h. extern steuerbar. Beispielsweise ist die Verbrauchswerterfassungseinheit 1 mit zumindest einer externen Konfigurationseinheit 5 über die Konfigurationsschnittstelle K konfigurierbar. Zum Beispiel werden die Funkbetriebsarten A1, A2 ab Werk oder durch den Messdienstleister eingestellt. Die Funktelegramme T1 bis Tn unterscheiden sich beispielsweise in Telegrammlänge TL und/oder Telegramminformationen TI, wie schematisch in Figur 2 dargestellt. Beispielsweise beeinflusst eine Telegramminformationsmenge die Telegrammlänge TL. Alternativ kann die Telegrammlänge TL aber auch durch die Startsequenz SQ des Funktelegramms T1 bis Tn, Figur 4, verändert werden.

Insbesondere umfassen Telegramminformationen TI aktuelle Verbrauchswerte, historische Verbrauchswerte, Statistikwerte und/oder Statusinformationen. Beispielsweise sind die Funktelegramme T1 bis Tn Datentelegramme.

Zur Hinterlegung der erfassten Verbrauchswerte, Statistikwerte und Statusinformationen umfasst die Verbrauchswerterfassungseinheit 1 beispielsweise zumindest eine Speichereinheit, nicht dargestellt. D. h., neben aktuellen Verbrauchswerten können auch historische Verbrauchswerte, Statistikwerte und Statusinformationen im periodischen oder nicht periodischen Wechsel sowie auf Anforderung und zueinander synchronisiert sowohl an das mobile als auch an das stationäre Datenerfassungsgerät 2 und 3 ausgesendet werden.

Wie in **Figur 1A** dargestellt, umfasst die Verbrauchswerterfassungseinheit 1 eine Konfigurationseinheit 5 und eine Konfigurationsschnittstelle K, die eingerichtet ist, die Verbrauchswerterfassungseinheit 1 zu konfigurieren, Telegramminformationen TI und die Funkbetriebsart A1, A2 der zu übertragenden Funktelegramme T1 bis Tn vorzugeben. Ein Nutzer, beispielsweise Messdienstleister, kann selbst entscheiden, welche Funkbetriebsart A1, A2 und/oder welche Funktelegramme T1 bis Tn und/oder welche Telegramminformationen TI, insbesondere erfassbare oder erfasste Informationen, aus diversen Funktelegrammen T1 bis Tn für seine Verwendung benötigt werden. Beispielsweise kann der Messdienstleister gezielt Telegramminformationen TI, d. h. Verbrauchs-, Statistik-, Statusinformationen aus den unterschiedlichen Funktelegrammen T1 bis Tn für seine Abrechnungen auswählen und übermittelt bekommen. Dadurch kann der Nutzer selbst eine Zeitdauer zur Datenerfassung (Sendehäufigkeit) bzw. die Auslesezeit (Telegrammlänge und/oder Chiprate und/oder Kodierung) im Wesentlichen beeinflussen, insbesondere verkürzen.

Um zu verhindern, dass gleichartige Funktelegramme T1 bis Tn verschiedener Verbrauchswerterfassungseinheiten 1, die gemeinsam beispielsweise innerhalb einer Liegenschaft angeordnet sind, Mikrosekunden genau zum selben Zeitpunkt übermittelt werden, weist die Verbrauchswerterfassungseinheit 1 beispielsweise eine Antikollisionseinstellung auf. Beispielsweise ist die Antikollisionseinstellung derart eingerichtet, dass geräteindividuelle Abweichungen zu synchronisierten Sendezeitpunkten der jeweiligen Funktelegramme T1 bis Tn verwendet werden.

In einer Weiterbildung können ereignisgesteuerte Funktelegramme TE an mobile und stationäre Datenerfassungsgeräte 2, 3 übertragen und empfangen werden, wobei die ereignisgesteuerten Funktelegramme TE gegenüber den zueinander synchronisierten Funktelegrammen T1 bis Tn eine Übertragungspriorität aufweisen. Zum Beispiel weist die Verbrauchswerterfassungseinheit 1 eine weitere Antikollisionseinstellung auf, die ausgebildet ist, um eine Blockierung des Empfangs und/oder der Aussendung von ereignisgesteuerten Funktelegrammen TE zu verhindern.

**Figur 2** zeigt schematisch ein Diagramm einer zeitlichen Abfolge der Telegrammaussendung von verschiedenen Funktelegrammen T1 bis T3 mit jeweils unterschiedlichen Telegramminformationen TI und unterschiedlichen Telegrammlänge TL. Die Abszissenachse stellt die Menge von Telegramminformationen TI dar. Die Ordinatenachse stellt die Zeit t mit den Sendezeitpunkten und Telegrammlängen TL (Dauer) sowie die Sendehäufigkeit der einzelnen Funktelegramme T1 bis T3 dar.

Die Funktelegramme T1 bis T3 weisen jeweils unterschiedliche Telegramminformationen TI und Telegrammlängen TL und Sendehäufigkeiten auf. Die größte Menge an Telegramminformationen TI, hier Verbrauchsdaten, beinhaltet das Funktelegramm T1. Funktelegramm T1 ist gleichzeitig das Telegramm mit der kürzesten Telegrammlänge TL und der größten Sendehäufigkeit. Funktelegramm T2 überträgt weniger Telegramminformationen TI als Funktelegramm T1, jedoch mehr als Funktelegramm T3. Die Telegrammlänge TL des Funktelegramms T2 ist größer als die vom Funktelegramm T1 und kleiner als die vom Funktelegramm T3. Die größte Telegrammlänge besitzt T3. Jedoch überträgt es die wenigsten Telegramminformationen.

Die Funktelegramme T1 bis T3 werden unterschiedlich oft ausgesendet, wobei die Sendezeitpunkte der Funktelegramme T1 bis T3 von einer Synchronisationsfrequenz abgeleitet werden. Die Häufigkeit und die Sendezeiträume der Telegrammaussendung der unterschiedlichen Funktelegramme T1 bis T3 können unabhängig voneinander eingestellt werden.

**Figur 3** zeigt schematisch eine Ausführungsform einer getakteten, beispielsweise stundenweisen, Aktivierung von Telegrammaussendung.

Im dargestellten Ausführungsbeispiel definiert t1 beispielsweise einen ersten Zeitpunkt, wie zum Beispiel 10 Uhr und t2 einen zweiten Zeitpunkt, beispielsweise 14 Uhr. Zwischen t1 und t2 werden, definiert durch den Abstand s, Funktelegramme T1 bis Tn übermittelt. Beispielsweise sind Telegrammaussendungen in einem Zeitraum vor dem Zeitpunkt t1 und nach dem Zeitpunkt t2 deaktiviert.

Diese getaktete Telegrammaussendung ist ebenfalls auf eine tage- und/oder monatsweise und/oder ereignisgesteuerte Taktung übertragbar.

**Figur 4** zeigt schematisch eine Ausführungsform einer Telegrammstruktur TS, Die Telegrammstruktur TS der jeweiligen Funktelegramme T1 bis Tn umfasst eine vorgebbare oder vorgegebene Startsequenz SQ und einen vorgebbaren oder vorgegebenen Nachrichtenkopf NK. Durch unterschiedliche Startsequenzen SQ und/oder Kennzeichen im Nachrichtenkopf NK ist die vorgesehene Verwendung der Funktelegramme T1 bis Tn kodierbar. Dabei werden die zu übertragenden Daten D, insbesondere Verbrauchsdaten, beispielsweise in Form eines Datenblocks, mit zusätzlichen so genannten CRCs versehen. D. h., die zu übertragenden Daten D werden mittels einer zyklischen Redundanzprüfung (CRC, kurz für: Cyclic Redundancy Check) geprüft, um Fehler bei der Übertragung zu identifizieren. Die Telegrammstruktur TS weist also mit CRCs CRC kodierte Daten D auf.

### BEZUGSZEICHENLISTE

- 1: Verbrauchswerterfassungseinheit
- 2, 3: Datenerfassungsgerät
- 4: Verbrauchswertmessgerät
- 5: Konfigurationseinheit

- A1, A2: Funkbetriebsart
- CRC: CRC (Cyclic Redundancy Check)
- D: Daten
- F: Funkschnittstelle
- K: Konfigurationsschnittstelle
- NK: Nachrichtenkopf
- T1 bis Tn: Funktelegramm
- TE: ereignisgesteuertes Funktelegramm
- TI: Telegramminformation
- TL: Telegrammlänge
- TS: Telegrammstruktur
- SE: Sende- und Empfangseinrichtung
- SQ: Startsequenz
- t: Zeit
- t1, t2: Zeitpunkt
- s: Sekunde

## Patentansprüche

1. Verbrauchswerterfassungseinheit (1) mit zumindest einer Funkschnittstelle (F), umfassend eine Anzahl unterschiedlicher Funkbetriebsarten (A1, A2) zur Übertragung von Funktelegrammen (T1 bis Tn) an mobile und stationäre Datenerfassungsgeräte (2, 3), wobei
- die Funkbetriebsarten (A1, A2) sich zumindest in Sendeleistung und Sendehäufigkeit unterscheiden,
- jeder Funkbetriebsart (A1, A2) zumindest ein Sendezeitraum zugeordnet ist, und **dadurch gekennzeichnet, dass**
- jede der Funkbetriebsarten (A1, A2) konfiguriert ist, in Abhängigkeit des jeweils zugeordneten Sendezeitraums eine Mehrzahl von verschiedenen Funktelegrammen (T1 bis Tn) im periodischen oder nicht periodischen Wechsel sowohl an mobile als auch an stationäre Datenerfassungsgeräte (2, 3) zu übertragen, wobei
eine erste Funkbetriebsart (A1) und eine zweite Funkbetriebsart (A2) derart einstellbar oder eingestellt sind, dass eine Sendeleistung und eine Sendehäufigkeit in der ersten Funkbetriebsart (A1) jeweils höher ist als eine Sendeleistung und eine Sendehäufigkeit in der zweiten Funkbetriebsart (A2),
- die Funkbetriebsarten (A1, A2) derart konfiguriert sind, dass diese die Funktelegramme (T1 bis Tn) sowohl für den stationären Empfang als auch für den mobilen Empfang aussenden.

2. Verbrauchswerterfassungseinheit (1) nach Anspruch 1, wobei die Funktelegramme (T1 bis Tn) jeweils ein Format aufweisen, welches derart ausgebildet ist, dass die Funktelegramme (T1 bis Tn) unabhängig von der Funkbetriebsart (A1, A2) sowohl von mobilen als auch von stationären Datenerfassungsgeräten (2, 3) empfangbar und dekodierbar sind.

3. Verbrauchswerterfassungseinheit (1) nach Anspruch 1 oder 2, wobei zumindest eine der Funkbetriebsarten (A1, A2) konfiguriert ist, die Mehrzahl der verschiedenen Funktelegramme (T1 bis Tn) zueinander synchronisiert an das mobile Datenerfassungsgerät (2) und an das stationäre Datenerfassungsgerät (3) zu übertragen.

4. Verbrauchswerterfassungseinheit (1) nach einem der vorhergehenden Ansprüche, wobei in jeder Funkbetriebsart (A1, A2) Übertragungsintervalle und/oder Sendezeiträume unterschiedlicher Funktelegramme (T1 bis Tn) unabhängig voneinander einstellbar sind.

5. Verbrauchswerterfassungseinheit (1) nach einem der vorhergehenden Ansprüche, wobei ein Wechsel der jeweiligen Funkbetriebsart (A1, A2) manuell und/oder ereignisgesteuert einstellbar ist.

6. Verbrauchswerterfassungseinheit (1) nach einem der vorhergehenden Ansprüche, wobei zumindest eine der Funkbetriebsarten (A1, A2) eingerichtet ist, eine Mehrzahl von kurzen, langen und/oder informationsgleichen oder informationsunterschiedlichen Funktelegrammen (T1 bis Tn) sowohl an mobile als auch an stationäre Datenerfassungsgeräte (2, 3) zu übertragen.

7. Verbrauchswerterfassungseinheit (1) nach einem der vorhergehenden Ansprüche, wobei sich die Funktelegramme (T1 bis Tn) zumindest in der Telegrammlänge (TL) unterscheiden und/oder die Funkbetriebsarten (A1, A2) sich zumindest in Kodierung und/oder Chiprate und/oder Trägerfrequenz und/oder Startsequenz unterscheiden.

8. Verbrauchswerterfassungseinheit (1) nach einem der vorhergehenden Ansprüche, wobei sich die Funktelegramme (T1 bis Tn) zumindest in Telegramminformationen (TI) unterscheiden, wobei Telegramminformationen (TI) zumindest aktuelle Verbrauchswerte und/oder historische Verbrauchswerte und/oder Statistikwerte und/oder Statusinformationen umfassen.

9. Verbrauchswerterfassungseinheit (1) nach einem der vorhergehenden Ansprüche, wobei zumindest eine Konfigurationseinheit (5) vorgesehen ist, die eine Konfigurationsschnittstelle (K) umfasst, die eingerichtet ist, Konfigurationsdaten (K) zu empfangen und/oder zu senden.

10. Verbrauchswerterfassungseinheit (1) nach Anspruch 9, wobei die Funkschnittstelle (F) eingerichtet ist, ereignisgesteuerte Funktelegramme (TE) zu empfangen.

11. Verbrauchswerterfassungseinheit (1) nach Anspruch 9 oder 10 , wobei die Konfigurationseinheit (5) eingerichtet ist, Telegramminformationen (TI) der zu übertragenden Funktelegramme (T1 bis Tn) und/oder die Funkbetriebsart (A1, A2) vorzugeben.

12. Verbrauchswerterfassungseinheit (1) nach einem der vorhergehenden Ansprüche, wobei zumindest eine der Funkbetriebsarten (A1, A2) konfiguriert ist, ereignisgesteuerte Funktelegramme (TE) an mobile und stationäre Datenerfassungsgeräte (2, 3) zu übertragen.

13. Verbrauchswerterfassungseinheit (1) nach Anspruch 9, wobei zumindest eine der Funkbetriebsarten (A1, A2) eine Antikollisionseinstellung umfasst, die eingerichtet ist, ereignisgesteuerten Funktelegramme (TE) gegenüber den zueinander synchronisierten Funktelegrammen (T1 bis Tn) mit einer Übertragungspriorität zu empfangen oder zu übertragen.

14. Verbrauchswerterfassungseinheit (1) nach einem der vorhergehenden Ansprüche, wobei zumindest eine der Funkbetriebsarten (A1, A2) zumindest eine Antikollisionseinstellung umfasst, die eingerichtet ist, zeitgleiche Übertragungen gleichartiger Funktelegramme (T1 bis Tn) von unterschiedlichen in einer Umgebung befindlichen Verbrauchswerterfassungseinheiten (1) zu verhindern.

## Claims

1. Consumption value recording unit (1) having at least one radio interface (F), comprising a number of different radio operating modes (A1, A2) for transmitting radio telegrams (T1 to Tn) to mobile and stationary data recording devices (2, 3), wherein
- the radio operating modes (A1, A2) differ at least in terms of transmission power and transmission frequency,
- at least one transmission period is assigned to each radio operating mode (A1, A2), and **characterized in that**
- each of the radio operating modes (A1, A2) is configured to transmit a plurality of different radio telegrams (T1 to Tn) both to mobile and to stationary data recording devices (2, 3) in periodic or non-periodic alternation on the basis of the respectively assigned transmission period, wherein
a first radio operating mode (A1) and a second radio operating mode (A2) are settable or set in such a manner that a transmission power and a transmission frequency in the first radio operating mode (A1) are each higher than a transmission power and a transmission frequency in the second radio operating mode (A2), and
- the radio operating modes (A1, A2) are configured such that they emit the radio telegrams (T1 to Tn) both for stationary reception and for mobile reception.

2. Consumption value recording unit (1) according to Claim 1, wherein the radio telegrams (T1 to Tn) each have a format which is designed such that the radio telegrams (T1 to Tn) are receivable and decodable both by mobile and by stationary data recording devices (2, 3) irrespective of the radio operating mode (A1, A2).

3. Consumption value recording unit (1) according to Claim 1 or 2, wherein at least one of the radio operating modes (A1, A2) is configured to transmit the plurality of different radio telegrams (T1 to Tn) to the mobile data recording device (2) and to the stationary data recording device (3) in a manner synchronized with one another.

4. Consumption value recording unit (1) according to one of the preceding claims, wherein transmission intervals and/or transmission periods of different radio telegrams (T1 to Tn) are settable independently of one another in each radio operating mode (A1, A2).

5. Consumption value recording unit (1) according to one of the preceding claims, wherein a change of the respective radio operating mode (A1, A2) is settable in a manual and/or event-controlled manner.

6. Consumption value recording unit (1) according to one of the preceding claims, wherein at least one of the radio operating modes (A1, A2) is configured to transmit a plurality of short or long radio telegrams (T1 to Tn) and/or radio telegrams (T1 to Tn) having the same or different information both to mobile and to stationary data recording devices (2, 3).

7. Consumption value recording unit (1) according to one of the preceding claims, wherein the radio telegrams (T1 to Tn) differ at least in terms of the telegram length (TL) and/or the radio operating modes (A1, A2) differ at least in terms of coding and/or chip rate and/or carrier frequency and/or starting sequence.

8. Consumption value recording unit (1) according to one of the preceding claims, wherein the radio telegrams (T1 to Tn) differ at least in terms of telegram information (TI), wherein telegram information (TI) comprises at least current consumption values and/or historical consumption values and/or statistical values and/or status information.

9. Consumption value recording unit (1) according to one of the preceding claims, wherein at least one configuration unit (5) is provided and comprises a configuration interface (K) which is configured to receive and/or transmit configuration data (K).

10. Consumption value recording unit (1) according to Claim 9, wherein the radio interface (F) is configured to receive event-controlled radio telegrams (TE).

11. Consumption value recording unit (1) according to Claim 9 or 10, wherein the configuration unit (5) is configured to specify telegram information (TI) of the radio telegrams (T1 to Tn) to be transmitted and/or the radio operating mode (A1, A2).

12. Consumption value recording unit (1) according to one of the preceding claims, wherein at least one of the radio operating modes (A1, A2) is configured to transmit event-controlled radio telegrams (TE) to mobile and stationary data recording devices (2, 3).

13. Consumption value recording unit (1) according to Claim 9, wherein at least one of the radio operating modes (A1, A2) comprises an anti-collision setting which is configured to receive or transmit event-controlled radio telegrams (TE) with a transmission priority over the radio telegrams (T1 to Tn) which are synchronized with one another.

14. Consumption value recording unit (1) according to one of the preceding claims, wherein at least one of the radio operating modes (A1, A2) comprises at least one anti-collision setting which is configured to prevent simultaneous transmissions of identical radio telegrams (T1 to Tn) from different consumption value recording units (1) in an environment.

## Revendications

1. Unité d'acquisition de valeur de consommation (1) comprenant au moins une interface radioélectrique (F), comprenant un certain nombre de modes de fonctionnement radioélectrique (A1, A2) différents pour la transmission de télégrammes radioélectriques (T1 à Tn) à des appareils d'acquisition de données (2, 3) mobiles et fixes,
- les modes de fonctionnement radioélectrique (A1, A2) se différenciant au moins par la puissance d'émission et la périodicité d'émission,
- au moins une période d'émission étant affectée à chaque mode de fonctionnement radioélectrique (A1, A2),
et **caractérisée en ce que**
- chacun des modes de fonctionnement radioélectrique (A1, A2) est configuré pour transmettre, en fonction de la période d'émission respectivement affectée, une pluralité de télégrammes radioélectriques (T1 à Tn) différents en alternance périodique ou non, à des appareils d'acquisition de données (2, 3) aussi bien mobiles que fixes,
- un premier mode de fonctionnement radioélectrique (A1) et un deuxième mode de fonctionnement radioélectrique (A2) étant réglables et réglés de telle sorte qu'une puissance d'émission et une périodicité d'émission dans le premier mode de fonctionnement radioélectrique (A1) sont respectivement supérieures à une puissance d'émission et une périodicité d'émission dans le deuxième mode de fonctionnement radioélectrique (A2),
- les modes de fonctionnement radioélectrique (A1, A2) étant configurés de telle sorte que ceux-ci émettent les télégrammes radioélectriques (T1 à Tn) aussi bien pour la réception fixe que pour la réception mobile.

2. Unité d'acquisition de valeur de consommation (1) selon la revendication 1, les télégrammes radioélectriques (T1 à Tn) possédant respectivement un format qui est configuré de telle sorte que les télégrammes radioélectriques (T1 à Tn) peuvent être reçus et peuvent être décodés aussi bien par des appareils d'acquisition de données (2, 3) mobiles que fixes indépendamment du mode de fonctionnement radioélectrique (A1, A2).

3. Unité d'acquisition de valeur de consommation (1) selon la revendication 1 ou 2, au moins l'un des modes de fonctionnement radioélectrique (A1, A2) étant configuré pour transmettre les télégrammes radioélectriques (T1 à Tn) synchronisés les uns par rapport aux autres à l'appareil d'acquisition de données mobile (2) et à l'appareil d'acquisition de données fixe (3).

4. Unité d'acquisition de valeur de consommation (1) selon l'une des revendications précédentes, les intervalles de transmission et/ou les périodes d'émission de différents télégrammes radioélectriques (T1 à Tn) étant réglables indépendamment les uns des autres dans chaque mode de fonctionnement radioélectrique (A1, A2).

5. Unité d'acquisition de valeur de consommation (1) selon l'une des revendications précédentes, un changement du mode de fonctionnement radioélectrique (A1, A2) respectif étant réglable manuellement et/ou de manière commandée par événement.

6. Unité d'acquisition de valeur de consommation (1) selon l'une des revendications précédentes, au moins l'un des modes de fonctionnement radioélectrique (A1, A2) étant conçu pour transmettre une pluralité de télégrammes radioélectriques (T1 à Tn) courts, longs et/ou d'informations identiques ou d'informations différentes aussi bien aux appareils d'acquisition de données (2, 3) mobiles que fixes.

7. Unité d'acquisition de valeur de consommation (1) selon l'une des revendications précédentes, les télégrammes radioélectriques (T1 à Tn) se différenciant au moins par la longueur du télégramme (TL) et/ou les modes de fonctionnement radioélectrique (A1, A2) se différenciant au moins par le codage et/ou le débit d'éléments et/ou la fréquence porteuse et/ou la séquence de départ.

8. Unité d'acquisition de valeur de consommation (1) selon l'une des revendications précédentes, les télégrammes radioélectriques (T1 à Tn) se différenciant au moins par les informations de télégramme (TI), les informations de télégramme (TI) comprenant au moins les valeurs de consommation actuelles et/ou des valeurs de consommation historique et/ou des valeurs statistiques et/ou des informations d'état.

9. Unité d'acquisition de valeur de consommation (1) selon l'une des revendications précédentes, au moins une unité de configuration (5) étant présente, laquelle comporte une interface de configuration (K) qui est conçue pour recevoir et/ou émettre des données de configuration (K).

10. Unité d'acquisition de valeur de consommation (1) selon la revendication 9, l'interface radioélectrique (F) étant conçue pour recevoir des télégrammes radioélectriques commandés par événement (TE).

11. Unité d'acquisition de valeur de consommation (1) selon la revendication 9 ou 10, l'unité de configuration (5) étant conçue pour prédéfinir les informations de télégramme (TI) des télégrammes radioélectriques (T1 à Tn) à transmettre et/ou le mode de fonctionnement radioélectrique (A1, A2).

12. Unité d'acquisition de valeur de consommation (1) selon l'une des revendications précédentes, au moins l'un des modes de fonctionnement radioélectrique (A1, A2) étant configuré pour transmettre des télégrammes radioélectriques commandés par événement (TE) à des appareils d'acquisition de données (2, 3) mobiles et fixes.

13. Unité d'acquisition de valeur de consommation (1) selon la revendication 9, au moins l'un des modes de fonctionnement radioélectrique (A1, A2) comprenant un réglage anticollision, qui est conçu pour recevoir ou pour transmettre les télégrammes radioélectriques commandés par événement (TE) avec une priorité de transmission par rapport aux télégrammes radioélectriques (T1 à Tn) synchronisés les uns par rapport aux autres.

14. Unité d'acquisition de valeur de consommation (1) selon l'une des revendications précédentes, au moins l'un des modes de fonctionnement radioélectrique (A1, A2) comprenant au moins un réglage anticollision qui est conçu pour empêcher des transmissions simultanées de télégrammes radioélectriques (T1 à Tn) de même type par des unités d'acquisition de valeur de consommation (1) différentes se trouvant dans un environnement donné.
